(19) Europäisches Patentamt
European Patent Office
Office européen des brevets

(11) **EP 2 158 444 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(51) Int Cl.:
*G01B 7/24* *(2006.01)* *B01F 7/04* *(2006.01)*

(21) Anmeldenummer: **08760753.7**

(22) Anmeldetag: **10.06.2008**

(86) Internationale Anmeldenummer:
**PCT/EP2008/057192**

(87) Internationale Veröffentlichungsnummer:
**WO 2008/152024 (18.12.2008 Gazette 2008/51)**

(54) **VERFAHREN ZUR VERMEIDUNG VON ÜBERBEANSPRUCHUNGEN EINER WELLE**

METHOD FOR AVOIDING OVERLOADING OF A SHAFT

PROCÉDÉ DESTINÉ À ÉVITER LA SURCHARGE D'UN ARBRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.06.2007 EP 07109976**

(43) Veröffentlichungstag der Anmeldung:
**03.03.2010 Patentblatt 2010/09**

(73) Patentinhaber: **BASF SE**
**67056 Ludwigshafen (DE)**

(72) Erfinder:
• **WEI, Huanmin**
**67227 Frankenthal (DE)**

• **HEIDE, Wilfried**
**67251 Freinsheim (DE)**
• **HILLEBRECHT, Annemarie**
**36093 Künzell (DE)**
• **STEPHAN, Oskar**
**68766 Hockenheim (DE)**
• **KARIM, Asif**
**68159 Mannheim (DE)**

(56) Entgegenhaltungen:
**EP-A- 0 124 383 EP-A- 0 585 623
DE-A1- 3 437 379 US-A- 4 527 904**

**Beschreibung**

Die Erfindung betrifft ein Verfahren zur Vermeidung von Überbeanspruchungen durch Überwachung der Durchbiegung einer Welle, insbesondere einer Welle in einem Mischkneter, wobei die Welle mindestens einseitig gelagert ist.

Mischkneter werden z.B. zur Herstellung von vernetzten, feinteiligen Polymerisaten eingesetzt. Ein solcher Mischkneter mit mindestens zwei achsparallelen, rotierenden Wellen, auf deren Oberflächen Scheibenflächen mit an ihrem Umfang angeordneten Knetbarren vorgesehen sind, ist z.B. aus EP-A 0 517 068 bekannt. Die Knetbarren sind so angeordnet, dass diejenigen auf der einen Welle in die auf der anderen Welle eingreifen. Abhängig von der Drehzahl der Wellen, die unterschiedlich sein kann, kann die Anzahl der Knetbarren auf den Wellen variieren. So sind beispielsweise bei einem Drehzahlverhältnis von 1:4 z.B. acht Knetbarren über den Umfang auf der Hauptwelle angeordnet und zwei Knetbarren auf der als Putzwelle bezeichneten zweite Welle, die sich viermal so schnell dreht wie die Hauptwelle:

DE-A-34 37 379 beschreibt eine Vorrichtung zum Messen von auf eine Welle ausgeübten Biegkräften. Dabei sind in Umfangrichtung der Welle Wirbelstromsensoren in einem vorgegebenen Abstand zur unbelasteten Welle vorgesehen, welche den Abstand zur Welle in ein Spannungssignal umwandeln. Diese werden mit einem Einstellwert einer Alarmeinrichtung verglichen, die beim Überschreiten des Einstellwertes einen Alarm anzeigt.

US-A-4 527 904 beschreibt eine Vorrichtung zu Messen der auf die Welle eines Mischkneters wirkenden Biegekräfte. Dabei sind zwei Abstandssensoren axial zur Welle angeordnet, deren Ausgangssignale mit mindestens einem Grenzwert verglichen werden.

EP-A-0 585 623 beschreibt die Orbitaldarstellung von Sensorsignalen, die von an einer Welle in Umfangsrichtung angeordneten Beschleunigungssensoren aufgenommen werden.

Das im Mischkneter enthaltene feinteilige Polymerisat liefert einen Widerstand bei der Rotationsbewegung der Wellen. Dies führt dazu, dass die Wellen einer Biegebeanspruchung und einer Torsionsbeanspruchung unterliegen, die miteinander gekoppelt sind. Um eine Schädigung der Wellen zu verhindern, ist es notwendig, bei Erreichen einer maximalen zulässigen Belastung bzw. Beanspruchung der Wellen, d.h. einer maximalen Durchbiegung bzw. Torsion Maßnahmen zu ergreifen, die eine Schädigung der Wellen verhindern. Dies ist z.B. das Abschalten des Mischkneters.

Aufgabe der vorliegenden Erfindung ist es, ein Verfahren bereit zu stellen, durch welches vermieden wird, dass Wellen bei Überbeanspruchung geschädigt werden.

Gelöst wird die Aufgabe durch ein Verfahren zur Vermeidung von Überbeanspruchung durch Überwachung der Durchbiegung einer Welle, insbesondere einer Welle in einem Mischkneter, wobei die Welle mindestens einseitig gelagert ist, folgende Schritte umfassend:

(a) Messen der Abweichung der Welle von der radialen Position ohne Belastung der Welle,

(b) Messen der Abweichung der Welle von der radialen Position an mindestens einer von der Lagerung abweichenden Stelle der Welle,

(c) Bestimmung einer Vergleichsgröße aus der gemessenen Abweichung von der radialen Position, wobei die Vergleichsgröße der Betrag der Differenz aus der ohne Belastung der Welle gemessenen Abweichung von der radialen Position und der gemessenen Abweichung bei belasteter Welle ist,

(d) Vergleich der in Schritt (c) gebildeten Vergleichsgröße mit einem vorgegebenen Grenzwert.

Im Sinne der vorliegenden Erfindung bedeutet Abweichung von der radialen Position eine Abweichung der Wellenachse in radialer Richtung an beliebiger Stelle der Welle in Bezug auf einen unbewegten Punkt, z.B. einen Punkt am Gehäuse, wie sie sich zum Beispiel durch eine Durchbiegung ergibt.

Die von der Lagerung abweichende Stelle, an der die Abweichung von der radialen Position gemessen wird, kann jede beliebige Stelle an der Welle sein, an der diese nicht gelagert ist. Bevorzugt wird die Messung jedoch an einer Seite der Welle, insbesondere im Randbereich nahe der Lagerung durchgeführt.

Aus der Abweichung der Welle von der radialen Position lässt sich die Durchbiegung der gesamten Welle bestimmen. Die Durchbiegung der Welle aus der Bestimmung der Abweichung von der radialen Position lässt sich beispielsweise mit Hilfe einer Finit-Element-Simulation der Wellenstruktur berechnen. Alternativ ist es auch möglich, die Welle als elastischen Biegebalken zu betrachten.

Aus der Modellierung lässt sich z.B. auch die maximal zulässige Durchbiegung für die Welle ermitteln, bei der eine Schädigung der Welle noch ausgeschlossen wird. Die maximal zulässige Durchbiegung der Welle ist dabei abhängig von den Stoffeigenschaften des Materials, aus dem die Welle gefertigt ist. So ist die maximal zulässige Durchbiegung insbesondere abhängig von der Elastizität und Streckgrenze des Werkstoffes, aus dem die Welle gefertigt ist. Zudem hängt die maximal zulässige Durchbiegung der Welle von der Geometrie der Wellenstruktur, der Lagerung der Welle bzw. dem Abstand zwischen den Knetbarren auf der Welle und dem Gehäuse ab. So soll z.B. vermieden werden, dass die Knetbarren während des Betriebs des Mischkneters an der Gehäusewand entlang schaben. Dies führt zum einen zu einem höheren Kraftaufwand, um die Welle zu bewegen, zum anderen können hierdurch Metallspäne aus der Wand geschabt werden, die das im Mischkneter enthaltene Produkt verunreinigen.

Da aus der Abweichung von der radialen Position an einer beliebigen Stelle der Welle auf die maximale Durchbiegung der Welle geschlossen werden kann, ist diese eine Messung ausreichend, um einen sicheren Betrieb des Mischkneters zu ermöglichen. Insbesondere kann durch den Schluss auf die maximale Durchbiegung vermieden werden, dass die Wellen des Mischkneters überlastet werden.

Die maximal zulässige Durchbiegung und damit die maximal zulässige Abweichung von der radialen Position lässt sich alternativ auch experimentell ermitteln.

Zur Messung der Abweichung der Welle von der radialen Position werden vorzugsweise mindestens zwei zueinander versetzte Messwertaufnehmer verwendet, um die Richtung der Abweichung von der radialen Position zu erfassen. Besonders bevorzugt werden zwei um 90° zueinander versetzte Messwertaufnehmer verwendet. Durch die zueinander versetzten Sensoren lässt sich die Abweichung in *zwei* verschiedenen Richtungen bestimmen. Hieraus lässt sich die gesamte Abweichung der Welle aus der radialen Position ermitteln. Bei der Verwendung nur eines Messwertaufnehmers lässt sich insbesondere eine Abweichung von der radialen Position, die quer zur Messrichtung des Messwertaufnehmers erfolgt, nicht erfassen, da bei dieser der Abstand zwischen Sensor und Welle konstant bleibt.

Zur Kalibrierung der Messsignale wird zunächst die Abweichung der Welle von der radialen Position ohne Belastung der Welle (Nullmessung) gemessen. Hierzu wird ein Messdurchgang durchgeführt, ohne dass der Mischkneter befüllt ist. Durch die Messung der radialen Abweichung ohne Belastung der Welle lassen sich z.B. Oberflächenunebenheiten der Welle, Lagerspiele oder Werkstoffeinflüsse erkennen.

Zur Bildung der Vergleichsgröße wird die Differenz aus der ohne Belastung der Welle gemessenen Abweichung von der radialen Position und der gemessenen Abweichung bei belasteter Welle bestimmt. Die Differenz aus der gemessenen Abweichung von der radialen Position bei belasteter Welle und der ohne Belastung der Welle gemessenen Abweichung ergibt die tatsächliche Abweichung der Welle von der radialen Position. Hierzu ist es jedoch notwendig, die Abweichung der Welle einer genauen Umfangsposition der Welle zuzuordnen. Auf diese Weise ist es möglich, jeweils von der aktuell gemessenen Abweichung die Abweichung bei unbelasteter Welle abzuziehen, die bei genau der gleichen Umfangsposition gemessen worden ist (genaue Kalibrierung).

Alternativ ist es auch möglich, aus der Abweichung von der radialen Position bei nicht belasteter Welle einen Mittelwert zu bilden und anschließend die Differenz aus dem Mittelwert und der gemessenen Abweichung zu bilden (grobe Kalibrierung). Vorteil dieser Ausführungsform ist es, dass eine genaue Zuordnung des Messpunktes am Wellenumfang nicht erforderlich ist und somit die Messung vereinfacht wird, da die Umfangsposition der Welle nicht erfasst werden muss.

In einer Ausführungsform wird die von den mindestens zwei Sensoren erfasste Abweichung der Welle in einer Orbit-Darstellung dargestellt. Das heißt, dass die Abweichung der Welle aus der radialen Position in y-Richtung über der Abweichung in x-Richtung aufgetragen wird. In diesem Fall sind die Sensoren um 90° zueinander versetzt. Ein Sensor misst dabei die Abweichung der Welle in x-Richtung und der zweite Sensor die Abweichung der Welle in y-Richtung. Bei der Darstellung in Orbit-Darstellung bilden maximale und minimale gemessene Werte der Abweichung von der radialen Position eine Hüllkurve. Durch die Hüllkurve wird die tatsächliche Abweichung eingeschlossen. Die Hüllkurve wird mit dem Grenzwert für die zulässige Abweichung verglichen.

Der Grenzwert wird vorzugsweise aus der maximal zulässigen Durchbiegung der Welle bestimmt.

Die maximal zulässige Durchbiegung der Welle, aus der der Grenzwert bestimmt wird, wird aus der zulässigen Festigkeitsgrenze $\sigma_s$ des Werkstoffes und einem Sicherheitsfaktor gebildet. Durch den Sicherheitsfaktor wird ein zusätzliches Polster eingebracht, durch welches vermieden wird, dass auch bei Erreichen des Grenzwertes die Welle nicht bis an ihre Belastungsgrenze beansprucht wird. Auf diese Weise können Schädigungen der Welle auch bei Erreichen des Grenzwertes ausgeschlossen werden. Der Sicherheitsfaktor liegt vorzugsweise im Bereich von 1,1 bis 1,3. Besonders bevorzugt ist der Sicherheitsfaktor 1,2.

Wenn aus der gemessenen Abweichung von der radialen Position eine Vergleichsgröße gebildet wird, so ist es bevorzugt, wenn auch für den Grenzwert eine entsprechende Vergleichsgröße gebildet wird. So ist es z.B. möglich, als Grenzwert die Differenz aus der maximal zulässigen Abweichung von der radialen Position und der Abweichung der Welle aus der radialen Position ohne Belastung der Welle zu bestimmen. Sobald der Grenzwert von der gemessenen Abweichung bzw. der Vergleichsgröße überschritten wird, werden geeignete Maßnahmen ergriffen. So ist es z.B. möglich, bei Erreichen des Grenzwertes einen Alarm auszugeben. Anhand des Alarms kann der Betreiber entscheiden, ob der Mischkneter weiter eingesetzt werden kann. Auch kann der Betreiber entscheiden, ob andere Maßnahmen zur Reduzierung der Belastung der Wellen ergriffen werden können. In einer Verfahrensvariante ist es möglich, einen zweiten Grenzwert vorzusehen, der größer ist als der erste Grenzwert. In diesem Fall ist es bevorzugt, wenn bei Erreichen des ersten Grenzwertes ein Alarm ausgelöst wird. Sobald der zweite Grenzwert erreicht wird, ist es bevorzugt, dass ein weiterer Alarm ausgelöst wird oder die Welle angehalten wird, um Beschädigungen zu verhindern. Der erste Grenzwert hat vorzugsweise einen Wert im Bereich von 75 bis 90 %, bevorzugt bei 85 %, des maximal zulässigen Wertes, der zweite Grenzwert liegt vorzugsweise im Bereich von 95 bis 100 % des maximal zulässigen Wertes.

Weitere Maßnahmen, die bei Erreichen oder Überschreiten des Grenzwertes getroffen werden können, sind zum Beispiel eine Verringerung des Feststoffgehaltes, beispielsweise durch Zugabe von Lösungsmittel, eine Reduzierung des Anteils an recycliertem Feinkornmaterial oder festen Additiven, wie Aerosil, Tonen oder ähnliche, eine Verringerung der Temperatur, damit weniger Lösungsmittel verdampft, eine Variation des Vernetzungsgrades des Produkts, eine Zugabe von mindestens einem Gleitmittel, wie Tensiden oder Wachsen, oder alternativ auch eine Erhöhung der Temperatur, um die Viskosität zu vermindern. Die geeignete Maßnahme ist dabei jeweils vom Einsatz des Mischkneters abhängig.

In einer bevorzugten Ausführungsform wird zusätzlich zur radialen Position auch die Umfangsposition der Welle erfasst. Hierzu ist es z.B. möglich, auf der Welle eine Markierung anzubringen, die von einem Sensor erfasst wird. Ein geeigneter Sensor ist z.B. ein Keyphaser oder Trigger. Mit einem Trigger wird jeweils eine Umdrehung der Welle ermittelt. Bei einer gleichmäßigen Umfangsgeschwindigkeit der Welle lässt sich aus dem Triggersignal und der von einem Sensor aufgenommenen Abweichung von der radialen Position in Abhängigkeit von der Zeit die genaue Umfangsposition der jeweiligen gemessenen Abweichung ermitteln.

Die Messung der Abweichung von der radialen Position erfolgt z.B. mit Hilfe einer Wirbelstromsonde. Eine derartige Wirbelstromsonde erzeugt ein Magnetfeld, mit dem der Abstand zwischen der Welle und der Sonde gemessen wird. Derartige Wirbelstromsonden sind dem Fachmann bekannt.

Aus der Größe der Abweichungen von der radialen Position lässt sich direkt auf die Durchbiegung der Welle schließen. Durch die Krafteinwirkung auf die Welle ist die Durchbiegung an die Torsion der Welle gekoppelt. Die Torsion ist direkt proportional zum Drehmoment der Welle. Da über das Kräftegleichgewicht an der Welle die Durchbiegung und die Torsion aneinander gekoppelt sind, ist es möglich, aus der Abweichung von der radialen Position auch die Torsion der Welle zu bestimmen. Jedoch ist im Allgemeinen die Biegebeanspruchung wesentlich stärker als die Torsionsbeanspruchung und damit für die Stabilität und Betriebssicherheit der Welle ausschlaggebend.

Die maximal gemessene Durchbiegung d einer Welle ergibt sich zu:

$$d = \sqrt{\left| (x - x_0 |_{max}^2 + (|y - y_0|_{max}^2 \pm y_{EG})^2 \right.}$$

bei genauer Kalibrierung, bzw.

$$d = \sqrt{\left( |x|_{max} - |x_0|_{mittel} + |x_{Opp}| \right)^2 + \left( |y|_{max} - |y_0|_{mittel} + |y_{Opp}| \pm y_{EG} \right)^2}$$

bei grober Kalibrierung mit dem maximalen Betrag der Differenz aus aktuell gemessenem Wert und dem Wert der Nullmessung an gleicher Position über einen definierten Zeitraum in x-Richtung $|x - x_0|_{max}$, dem maximalen Betrag der Differenz aus aktuell gemessenem Wert und Wert der Nullmessung von gleicher Position in y-Richtung über einen definierten Zeitraum $|y-y_0|_{max}$, der Abweichung aufgrund des Eigengewichts $y_{EG}$, dem Betrag des maximal gemessenen Werts in x-Richtung über einen definierten Zeitraum $|x|_{max}$, dem Betrag des Mittelwertes der Nullmessung in x-Richtung $|x_0|_{mittel}$, dem Betrag der Differenz aus maximalem und minimalem Wert der Nullmessung $|x_{Opp}|$, dem Betrag des maximal gemessenen Wertes in y-Richtung über einen definierten Zeitraum $|y|_{max}$, dem Betrag des Mittelwertes der Nullmessung in y-Richtung $|y_0|_{mittel}$, dem Betrag der Differenz aus maximalem und minimalem Wert der Nullmessung in y-Richtung $|y_{Opp}|$.

Die positive oder negative Überlagerung von $\pm y_{EG}$ hängt von der Wellenbelastungssituation ab. Wenn die maximale Abweichung von der radialen Position in y-Richtung, d.h. in Richtung der Wirkung der Schwerkraft, auftritt, wird $y_{EG}$ dazu addiert, im umgekehrten Fall, d.h. wenn die maximale Abweichung von der radialen Position entgegen der Richtung der Wirkung der Schwerkraft auftritt, wird $y_{EG}$ abgezogen.

Im Folgenden wird eine Ausführungsform der Erfindung anhand von Zeichnungen näher beschrieben. Darin zeigen:

Figur 1   eine schematische Darstellung der Kräfteverteilung an einem Mischkneter mit zwei Wellen,

Figur 2    einen Signalverlauf einer Nullmessung,

Figur 3    einen Signalverlauf bei belasteter Welle zusammen mit der Nullmessung,

Figur 4    einen Signalverlauf mit grober Kalibrierung,

Figur 5    einen Signalverlauf mit genauer Kalibrierung,

Figur 6    eine Orbit-Darstellung mit Hüllkurve.

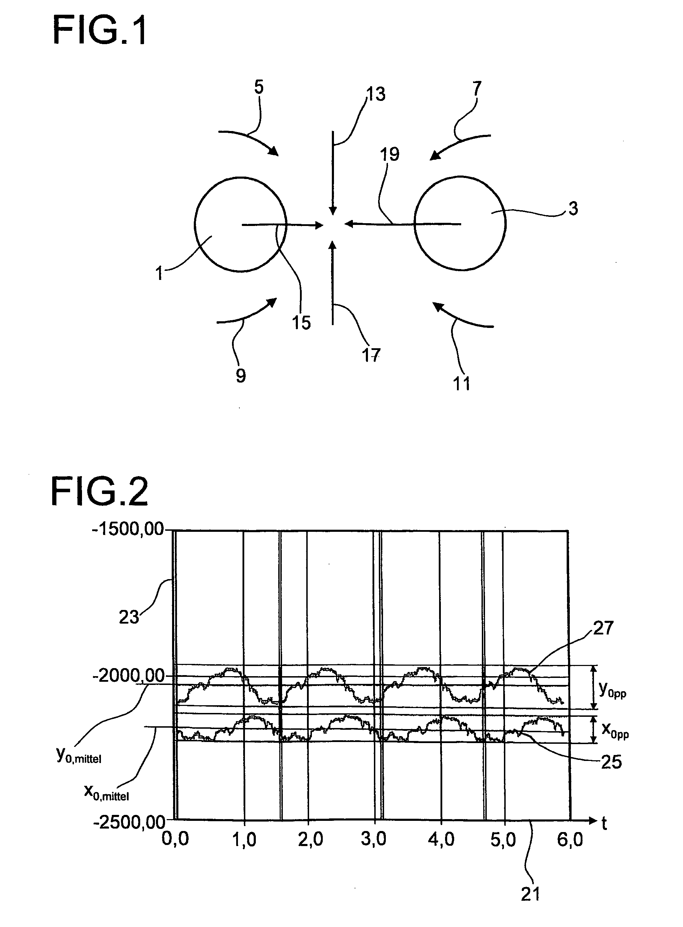

In Figur 1 ist die Kräfteverteilung an einem Mischkneter mit zwei Wellen schematisch dargestellt.

Ein Mischkneter mit zwei Wellen umfasst eine Rührwelle 1 und eine Putzwelle 3. Bei einem Mischkneter sind im Allgemeinen sowohl auf der Rührwelle 1 als auch auf der Putzwelle 3 Knetbarren angeordnet, die jede beliebige geeignete Form aufweisen können. Die Anzahl der über den Umfang verteilten Knetbarren auf der Rührwelle 1 kann sich dabei von der auf der Putzwelle 3 unterscheiden. Bei einer unterschiedlichen Anzahl an Knetbarren auf Rührwelle 1 und Putzwelle 3 werden diese üblicherweise mit unterschiedlichen Drehzahlen angetrieben. Als Putzwelle 3 wird dabei diejenige Welle bezeichnet, die über den Umfang verteilt weniger Knetbarren aufweist und schneller rotiert. Das Drehzahlverhältnis ist dabei vom Verhältnis der Anzahl der Knetbarren abhängig. Die Rührwelle 1 und die Putzwelle 3 können entweder gleichsinnig oder wie in Figur 1 dargestellt gegensinnig angetrieben werden.

Durch einen Antrieb werden die Rührwelle 1 und die Putzwelle 3 in eine rotierende Bewegung versetzt. Hieraus resultiert ein erstes Drehmoment 5 an der Rührwelle 1 und ein zweites Drehmoment 7 an der Putzwelle 3.

Durch den Knetprozess, bei dem die Knetbarren auf der Rührwelle 1 und der Putzwelle 3 in die zu knetende Substanz eintauchen und diese zerreißen, wirkt ein erster Widerstand 9 auf die Rührwelle 1, der dem ersten Drehmoment 5 entgegengerichtet ist. Auf die Putzwelle 3 wirkt ein zweiter Widerstand 11, der dem zweiten Drehmoment 7 der Putzwelle 3 entgegen gerichtet ist. Wenn die Knetbarren der Rührwelle 1 am Gehäuse schaben, wird der erste Widerstand 9 weiter verstärkt. Entsprechend wird der zweite Widerstand 11 der Putzwelle 3 weiter verstärkt, wenn die Knetbarren der Putzwelle 3 am Gehäuse schaben.

Die in entgegengesetzter Richtung auf die Putzwelle 3 und die Rührwelle 1 wirkenden Drehmomente 5, 9; 7, 11 führen zu einer Torsionsbeanspruchung der jeweiligen Welle 1, 3.

Aufgrund des Knetprozesses wirkt weiterhin eine Kraft auf die Rührwelle 1 bzw. Putzwelle 3, die jeweils von der anderen Welle verursacht wird. Zur mathematischen Modellierung wird die Kraft, die jeweils an der anderen Welle 1, 3 aufgeprägt wird, in eine Kraft zusammengefasst, die an einer äquivalenten Länge angreift. Dies ist notwendig, da die jeweils ausgeübte Kraft über den Abstand verteilt auf die Welle einwirkt. Die durch die Putzwelle 3 verursachte Kraft an der Rührwelle 1 ist mit einem Pfeil 13 dargestellt. Die Kraft 13 wird auch als Stützkraft bezeichnet. Der Angriffspunkt der Kraft 13 ergibt sich z.B. aus einem Lastmodell, das auf Laborversuchen und Betriebsmessungen basiert. Der äquivalente Abstand, an dem die Kraft 13 an der Rührwelle 1 angreift, ist mit einem Pfeil 15 dargestellt. Entsprechend wirkt auch auf die Putzwelle 3 eine Stützkraft 17, die durch die Rührwelle 1 verursacht wird. Der äquivalente Abstand, an dem die Stützkraft 17 an der Putzwelle angreift ist mit Bezugszeichen 19 bezeichnet.

Die Betrachtung für die maximal zulässige Durchbiegung der Putzwelle 3 bzw. Rührwelle 1 ist jeweils unabhängig für die Putzwelle 3 bzw. Rührwelle 1 durchzuführen.

Aus dem in Figur 1 dargestellten schematischen Modell der Kräfteverteilung auf die Rührwelle 1 und die Putzwelle 3 lässt sich die maximal zulässige Belastung, z.B. durch eine Finite-Element-Methode oder ein Balkenmodell berechnen.

In Figur 2 ist ein Signalverlauf einer Nullmessung für die Putzwelle 3 dargestellt. Hierbei ist auf der x-Achse 21 die Zeit t aufgetragen und auf der y-Achse 23 die Abweichung auf der radialen Position. Die Messung wurde mit zwei um 90° zueinander versetzten Sensoren durchgeführt, um die Abweichung in x-Richtung und y-Richtung zu ermitteln.

In Figur 2 ist der Verlauf für vier Umdrehungen der Putzwelle 3 dargestellt. Eine Umdrehung dauert dabei in der hier dargestellten Ausführungsform 1,6 Sekunden. Selbstverständlich ist es auch möglich, dass sich die Putzwelle schneller oder langsamer dreht.

Mit Bezugszeichen 25 ist die Abweichung in x-Richtung und mit Bezugszeichen 27 ist die Abweichung in y-Richtung dargestellt. Es ist zu erkennen, dass die Abweichung einen sinusförmigen Verlauf aufweist. Das Maximum ist zwischen der Abweichung in x-Richtung 25 und der Abweichung in y-Richtung 27 jeweils um 90° versetzt. Dies ist darauf zurückzuführen, dass auf die Welle keine Belastung einwirkt. Die Abweichung ergibt sich allein aus Fertigungsungenauigkeiten und Unebenheiten sowie der Oberflächenbehandlung auf der Putzwelle 3. Aus der Nullmessung können der Mittelwert $|x_0|_{mittel}$, $|y_0|_{mittel}$ sowie die Werte für $|x_{Opp}|$ und $|y_{Opp}|$ bestimmt werden.

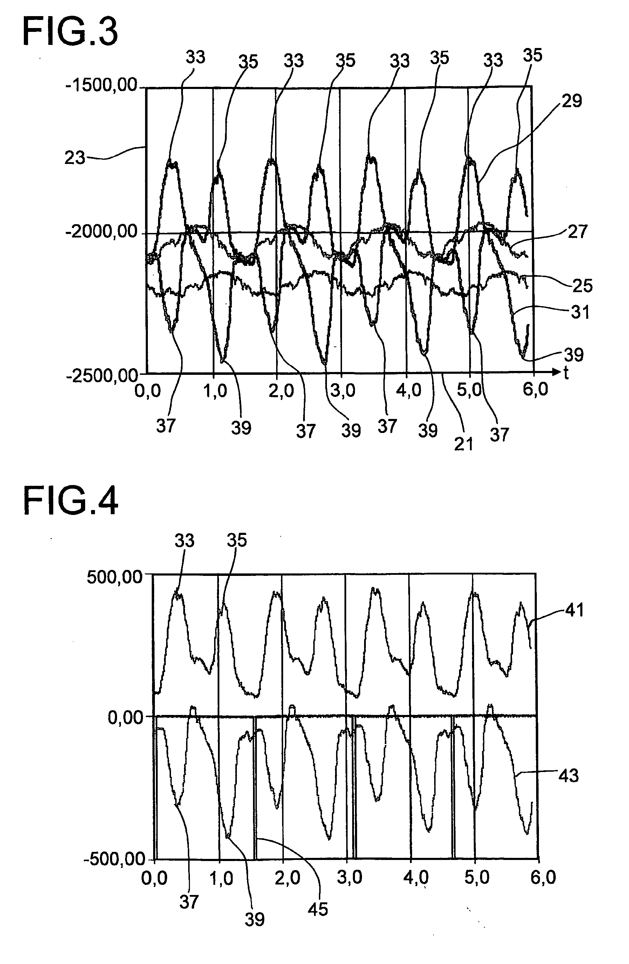

In Figur 3 ist ein Signalverlauf bei belasteter Welle zusammen mit der Nullmessung dargestellt.

Ebenso wie in Figur 2 ist auch in Figur 3 auf der x-Achse 21 die Zeit und auf der y-Achse 23 die Abweichung von der Nulllage für vier Umdrehungen der Putzwelle 3 dargestellt. Mit Bezugszeichen 29 ist die Messung in x-Richtung bezeichnet und mit Bezugszeichen 31 die Messung in y-Richtung. In Figur 3 ist zu erkennen, dass der Messverlauf in x-Richtung pro Umdrehung ein erstes Maximum 33 und ein zweites Maximum 35 aufweist. Das erste Maximum 33 und das zweite Maximum 35 stellen jeweils die größte Abweichung der Putzwelle 3 aus der Nulllage dar. An den Positionen, an denen der Verlauf in x-Richtung das erste Maximum 33 und das zweite Maximum 35 aufweist, zeigt die Messung in y-Richtung 31 ein erstes Minimum 37 und ein zweites Minimum 39. Auch dieses stellt jeweils die größte Abweichung aus der Nulllage dar.

Das erste Maximum 33 und das zweite Maximum 35 bzw. erste Minimum 37 und das zweite Minimum 39 sind darauf zurückzuführen, dass die Putzwelle 3 über den Umfang verteilt zwei Knetbarren aufweist. Jeweils wenn die Position der Knetbarren an einer Stelle ist, an der diese die Knetbarren der Rührwelle 1 kämmen, wirkt die größte Kraft auf die Putzwelle 3. Dies führt zu einer Zunahme der Belastung und damit einer größeren Durchbiegung. Aufgrund der in einem Winkel von 180° versetzt angeordneten Knetbarren auf der Putzwelle 3 führt dies zu zwei Ausschlägen in der Messung während einer Umdrehung. Solange keine Knetbarren ineinander greifen ist die Abweichung am geringsten. Hieraus ergibt sich die in Figur 3 ersichtliche oszillierende Belastung der Welle.

In Figur 4 ist ein Signalverlauf mit grober Kalibrierung dargestellt.

Bei einer groben Kalibrierung wird aus der Nullmessung, wie sie in Figur 2 dargestellt ist, ein Mittelwert $x_{0,mittel}$, $y_{0,mittel}$ gebildet. Dieser Mittelwert $x_{0,mittel}$, $y_{0,mittel}$ wird von dem gemessenen Verlauf bei belasteter Welle in x-Richtung bzw. in y-Richtung subtrahiert. Da jeweils ein konstanter Wert abgezogen wird, ähneln die Verläufe in x-Richtung und y-Richtung bei belasteter Welle den nicht kalibrierten Verläufen der Messungen, wie sie in Figur 3 dargestellt sind. Der grob kalibrierte Signalverlauf in x-Richtung 41 weist ebenfalls ein erstes Maximum 33 und zweites Maximum 35 bei jeder Umdrehung der Putzwelle 3 auf. Auch der grob kalibrierte Signalverlauf in y-Richtung 43 weist pro Umdrehung der Putzwelle 3 ein erstes Minimum 37 und ein zweites Minimum 39 auf. Wie zuvor beschrieben, ergeben sich die Maxima 33, 35 bzw. Minima 37, 39 durch das Kämmen der Putzwelle 3 und der Rührwelle 1, wobei auf der Putzwelle 3 über den Umfang verteilt zwei Knetbarren angeordnet sind. Jeweils wenn die Knetbarren der Putzwelle 3 durch die Knetbarren der Rührwelle 1 kämmen, wirkt auf die Putzwelle 3 eine maximale Kraft, was zu einer größeren Durchbiegung der Welle und damit zu einem vergrößerten Ausschlag führt.

In Figur 4 ist zusätzlich ein Triggersignal 45 dargestellt, welches jeweils nach einer Umdrehung der Putzwelle 3 einen Ausschlag anzeigt. Hierdurch lässt sich die Abweichung von der radialen Position jeweils einer genauen Stellung der Welle 1, 3 zuordnen.

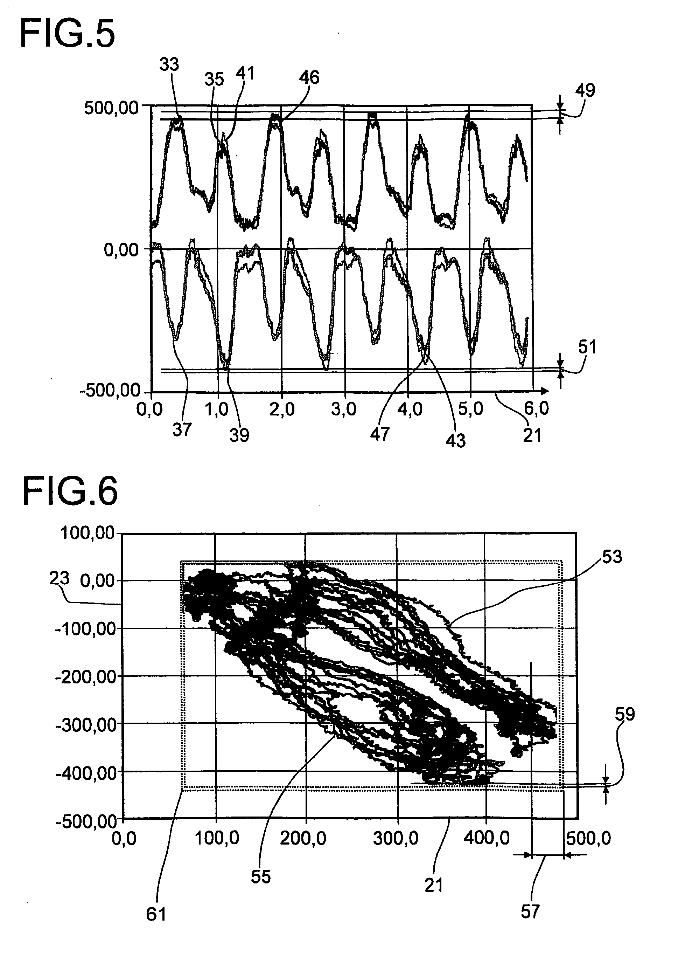

In Figur 5 sind ein Signalverlauf mit grober Kalibrierung und ein Signalverlauf mit genauer Kalibrierung dargestellt.

Im Unterschied zur groben Kalibrierung, wie sie auch in Figur 4 dargestellt ist, wird bei der genauen Kalibrierung, wie sie in Figur 5 dargestellt ist, jeweils der Wert der Nullmessung vom gemessenen Wert bei belasteter Welle abgezogen, der an der gleichen Position ermittelt wurde. Hierzu ist es notwendig, z.B. mit einem Triggersignal wie es Figur 4 dargestellt ist, die exakte Lage der Putzwelle zu ermitteln.

Beim Vergleich des genau kalibrierten Signalverlaufes mit dem grob kalibrierten Signalverlauf zeigt sich, dass insbesondere in den Maxima 33, 35 bzw. Minima 37, 39 unterschiedliche Werte ermitteln werden. So zeigt der genau kalibrierte Signalverlauf in x-Richtung 45 größere Werte für das erste Maximum 33 als der grob kalibrierte Signalverlauf in x-Richtung 41, während der grob kalibrierte Signalverlauf in x-Richtung 41 größere Werte für das zweite Maximum 35 ergibt. Entsprechend ergibt sich auch für die Abweichung in y-Richtung ein größerer Wert für das erste Minimum 37 bei dem genau kalibrierten Signalverlauf in y-Richtung 47, während das zweite Minimum 39 einen größeren Wert aufweist als bei dem grob kalibrierten Signalverlauf in y-Richtung 43.

Die größte Durchbiegung der Putzwelle 3 bzw. der Rührwelle 1 ergibt sich bei der maximalen Auslenkung. Das heißt, dass bei der maximalen Auslenkung die Durchbiegung der Wellen 1, 3 am größten ist. In Figur 5 ist die Differenz 49 der maximalen Auslenkung in x-Richtung zwischen grober Kalibrierung und genauer Kalibrierung sowie die Differenz 51 der maximalen Auslenkung in y-Richtung zwischen Darstellung mit grober Kalibrierung und genauer Kalibrierung dargestellt.

Der Unterschied genauer und grober Kalibrierung ist immer kleiner als die Differenz zwischen maximalem und minimalem Wert der Nullmessung $x_{Opp}$, $y_{Opp}$. Für eine sichere Bewertung wird der Wert $x_{Opp}$ bzw. $y_{Opp}$ bei grober Kalibrierung dazuaddiert.

In Figur 6 ist eine Orbit-Darstellung mit Hüllkurve gezeigt. In dieser ist auf der x-Achse 21 die Wellenschwingung in x-Richtung und auf der y-Achse 23 die Wellenschwingung in y-Richtung aufgetragen. Die dargestellten Kurven zeigen einmal die Wellenschwingung 53 mit grober Kalibrierung und weiterhin die Wellenschwingung 55 mit genauer Kalibrierung. Zwischen der grob kalibrierten und der genau kalibrierten Darstellung ergibt sich, wie vorstehend bei Figur 5 beschrieben, eine Differenz 57 in x-Richtung und eine Differenz 59 in y-Richtung.

Um die aufgezeichneten Wellenschwingungen wird eine Hüllkurve 61 in Form eines Kastens gelegt. Die Hüllkurve 61 wird dabei so aufgenommen, dass diese jeweils die maximale gemessene Abweichung der Welle 1, 3 umfasst. Sobald die die maximalen gemessenen Abweichungen umschließende Hüllkurve die Werte für die maximal zulässige Abweichung überschreitet, werden Maßnahmen ergriffen. Zu ergreifende Maßnahmen sind z.B. das Ausgeben eines Alarms oder das Anhalten der Maschine, um Schädigungen zu vermeiden.

Bezugszeichenliste

| 1 | Rührwelle |
|---|---|
| 3 | Putzwelle |
| 5 | Erstes Drehmoment |
| 7 | Zweites Drehmoment |
| 9 | Erster Widerstand |
| 11 | Zweiter Widerstand |
| 13 | Kraft auf die Rührwelle 1 |
| 15 | Äquivalenter Abstand für die Kraft 13 |
| 17 | Kraft auf die Putzwelle 3 |
| 19 | Äquivalenter Abstand für die Kraft 17 |
| 21 | x-Achse |
| 23 | y-Achse |
| 25 | Abweichung in x-Richtung |
| 27 | Abweichung in y-Richtung |
| 29 | Messung in x-Richtung |
| 31 | Messung in y-Richtung |
| 33 | Erstes Maximum |
| 35 | Zweites Maximum |
| 37 | Erstes Minimum |
| 39 | Zweites Minimum |
| 41 | Grob kalibrierter Signalverlauf in x-Richtung |
| 43 | Grob kalibrierter Signalverlauf in y-Richtung |
| 45 | Triggersignal |
| 46 | Genau kalibrierter Signalverlauf in x-Richtung |
| 47 | Genau kalibrierter Signalverlauf in y-Richtung |
| 49 | Differenz der maximalen Auslenkung in x-Richtung |
| 51 | Differenz der maximalen Auslenkung in y-Richtung |
| 53 | Wellenschwingung mit grober Kalibrierung |
| 55 | Wellenschwingung mit genauer Kalibrierung |
| 57 | Differenz in x-Richtung |
| 59 | Differenz in y-Richtung |
| 61 | Hüllkurve |

**Patentansprüche**

1. Verfahren zur Überwachung der Durchbiegung einer Welle, insbesondere einer Welle in einem Mischkneter, wobei die Welle mindestens einseitig gelagert ist, folgende Schritte umfassend:

   (a) Messen der Abweichung der Welle von der radialen Position ohne Belastung der Welle,
   (b) Messen der Abweichung der Welle von der radialen Position an mindestens einer von der Lagerung abweichenden Stelle der Welle,
   (c) Bestimmung einer Vergleichsgröße aus der gemessenen Abweichung von der radialen Position, wobei die Vergleichsgröße der Betrag der Differenz aus der ohne Belastung der Welle gemessenen Abweichung von der radialen Position und der gemessenen Abweichung bei belasteter Welle ist,
   (d) Vergleich der in Schritt (c) gebildeten Vergleichsgröße mit einem vorgegebenen Grenzwert.

2. Verfahren nach Anspruch 1, **dadurch gekennzeichnet, dass** zur Messung mindestens zwei zueinander in Umfangsrichtung versetzte Sensoren verwendet werden, um die Richtung der Abweichung von der radialen Position zu erfassen.

3. Verfahren nach Anspruch 1 oder 2, **dadurch gekennzeichnet, dass** die von den mindestens zwei Sensoren erfasste Abweichung von der radialen Position oder die Vergleichsgröße in einer Orbitdarstellung dargestellt wird.

4. Verfahren nach Anspruch 3, **dadurch gekennzeichnet, dass** der Grenzwert, mit dem die Abweichung von der radialen Position verglichen wird, eine Hüllkurve in der Orbitdarstellung bildet.

5. Verfahren nach einem der Ansprüche 1 bis 4, **dadurch gekennzeichnet, dass** der Grenzwert aus der maximal zulässigen Durchbiegung der Welle bestimmt wird.

6. Verfahren nach Anspruch 5, **dadurch gekennzeichnet, dass** der Grenzwert der Betrag der Differenz aus der Abweichung von der radialen Position ohne Belastung der Welle und der maximal zulässigen Abweichung ist.

7. Verfahren nach Anspruch 5 oder 6, **dadurch gekennzeichnet, dass** bei Überschreiten des Grenzwertes die Welle angehalten wird.

8. Verfahren nach einem der Ansprüche 1 bis 7, **dadurch gekennzeichnet, dass** die Umfangsposition der Welle erfasst wird.

9. Verfahren nach Anspruch 8, **dadurch gekennzeichnet, dass** zur Erfassung der Umfangsposition auf der Welle eine Markierung angebracht ist, die von einem Sensor erfasst wird.

10. Verfahren nach einem der Ansprüche 1 bis 9, **dadurch gekennzeichnet, dass** die Abweichung von der radialen Position mit einer Wirbelstromsonde bestimmt wird.

## Claims

1. A method for monitoring the bending of a shaft, particularly a shaft in a mixing kneader, the shaft having a bearing at least on one side, comprising the following steps:

   (a) measuring the deviation of the shaft from the radial position without a load on the shaft,
   (b) measuring the deviation of the shaft from the radial position at at least one point on the shaft which deviates from the bearing,
   (c) determining a reference value from the measured deviation from the radial position, the reference value being the magnitude of the difference between the deviation from the radial position as measured without a load on the shaft and the deviation measured with a loaded shaft,
   (d) comparing the reference value formed in step (c) with a predetermined limit value.

2. The method according to claim 1, wherein at least two sensors mutually offset in the circumferential direction are used for the measurement, in order to record the direction of the deviation from the radial position.

3. The method according to claim 1 or 2, wherein the deviation from the radial position as measured by the at least two sensors or the reference value is represented in an orbital representation.

4. The method according to claim 3, wherein the limit value, with which the deviation from the radial position is compared, forms an envelope curve in the orbital representation.

5. The method according to of claims 1 to 4, wherein the limit value is determined from the maximum permissible bending of the shaft.

6. The method according to claim 5, wherein the limit value is the magnitude of the difference between the deviation from the radial position without a load on the shaft and the maximum permissible deviation.

7. The method according to claim 5 or 6, wherein the shaft is stopped if the limit value is exceeded.

8. The method according to one of claims 1 to 7, wherein the circumferential position of the shaft is recorded.

9. The method according to claim 8, wherein a marking, which is recorded by a sensor, is applied on the shaft in order to record the circumferential position.

**10.** The method according to one of claims 1 to 9, wherein the deviation from the radial position is determined by an eddy current probe.

## Revendications

**1.** Procédé de surveillance de la flèche d'un arbre, notamment de l'arbre d'un malaxeur-mélangeur, dans lequel l'arbre est monté sur palier d'au moins un côté, comprenant les étapes consistant à :

(a) mesurer l'écart de l'arbre à la position radiale lorsque l'arbre n'est soumis à aucune charge,
(b) mesurer l'écart de l'arbre à la position radiale en au moins un point de l'arbre s'écartant du montage sur palier,
(c) déterminer une grandeur de comparaison à partir de l'écart mesuré par rapport à la position radiale, dans lequel la grandeur de comparaison est la valeur de la différence entre l'écart à la position radiale mesuré lorsque l'arbre n'est soumis à aucune charge et l'écart mesuré lorsque l'arbre est soumis à une charge,
(d) comparer la grandeur de comparaison déterminée à l'étape (c) à une valeur limite prédéterminée.

**2.** Procédé selon la revendication 1, **caractérisé en ce qu'**on utilise pour la mesure au moins deux capteurs décalés l'un par rapport à l'autre dans la direction de la circonférence afin de déterminer la direction de l'écart à la position radiale.

**3.** Procédé selon la revendication 1 ou 2, **caractérisé en ce que** l'écart à la position radiale déterminé par les au moins deux capteurs ou **en ce que** la grandeur de comparaison est représenté par une représentation orbitale.

**4.** Procédé selon la revendication 3, **caractérisé en ce que** la valeur limite à laquelle est comparé l'écart à la position radiale forme une courbe d'enveloppe dans la représentation orbitale.

**5.** Procédé selon l'une des revendications 1 à 4, **caractérisé en ce que** la valeur limite est déterminée à partir de la flèche maximale admissible de l'arbre.

**6.** Procédé selon la revendication 5, **caractérisé en ce que** la valeur limite est la valeur de la différence entre l'écart à la position radiale lorsque l'arbre n'est soumis à aucune charge et l'écart maximal admissible.

**7.** Procédé selon la revendication 5 ou 6, **caractérisé en ce que** lors d'un dépassement de la valeur limite, l'arbre est amené à s'arrêter.

**8.** Procédé selon l'une des revendications 1 à 7, **caractérisé en ce que** la position circonférentielle de l'arbre est déterminée.

**9.** Procédé selon la revendication 8, **caractérisé en ce qu'**un repère détecté par le capteur est appliqué à l'arbre pour déterminer la position circonférentielle.

**10.** Procédé selon l'une des revendications 1 à 9, **caractérisé en ce que** l'écart à la position radiale est déterminé à l'aide d'un courant de Foucault.

# FIG.1

# FIG.2

## FIG.3

## FIG.4

## FIG.5

## FIG.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0517068 A
- DE 3437379 A
- US 4527904 A
- EP 0585623 A